# FASCICULE DE BREVET EUROPEEN

(11) **EP 2 349 749 B1**
(45) Date de publication et mention de la délivrance du brevet: **17.12.2014**
(21) Numéro de dépôt: 09737001.9
(22) Date de dépôt: 23.10.2009
(51) Int. Cl.: B60C 23/04

(54) **PROCEDE ET DISPOSITIF D'IDENTIFICATION DE LA POSITION D'UNE ROUE D'UN VEHICULE**
VERFAHREN UND DESSEN VORRICHTUNG ZUR FESTSTELLUNG DER RELATIVEN POSITION EINES KRAFTFAHRZEUGRADS
METHOD AND DEVICE FOR IDENTIFYING THE POSITION OF A WHEEL OF A VEHICLE

(30) Priorité: 27.10.2008 FR 0857294
(43) Date de publication de la demande: 03.08.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH); TRW Automotive U.S. LLC, Livonia, Michigan 48150 (US)
(72) Inventeur: HUCHARD, Xavier, 63430 Pont du Château (FR); CORNIOT, Philippe, 63530 Enval (FR); PENOT, Thierry, 63000 Clermont-Ferrand (FR)
(74) Mandataire: Dequire, Philippe Jean-Marie Denis
(86) Numéro de dépôt international: PCT/EP2009/063946
(87) Numéro de publication internationale: WO 2010/049352

(56) Documents cités:
- EP-A- 1 800 913
- FR-A- 2 888 656

## Description

### Domaine de l'invention

L'invention concerne un procédé d'identification de la position avant-arrière ou gauche-droite d'une roue d'un véhicule. Elle concerne également un système de surveillance des roues d'un véhicule équipées de dispositifs mettant en oeuvre le procédé d'identification.

### Arrière plan technologique

De plus en plus de véhicules automobiles possèdent, à des fins de sécurité, des systèmes de surveillance comportant des capteurs montés sur chacune des roues du véhicule, dédiés à la mesure de paramètres, tels que pression ou température des pneumatiques des roues, et destinés à informer le conducteur de toute variation anormale du paramètre mesuré.

Ces systèmes de surveillance comprennent usuellement un capteur placé dans chaque roue avec un microprocesseur et un émetteur radiofréquence, ainsi qu'une unité centrale de réception des signaux émis par les émetteurs, avec un calculateur intégrant un récepteur radiofréquence connecté à une antenne.

Un des problèmes que nécessitent de résoudre de tels systèmes de surveillance réside dans l'obligation de devoir associer à chaque signal reçu par le récepteur de l'unité centrale, une information concernant la localisation du capteur et donc de la roue à l'origine de ce signal, cette obligation perdurant pendant la durée de vie du véhicule, c'est-à-dire devant être respectée même après des changements de roues ou plus simplement des inversions de la position de celles-ci.

Le document EP 1 669 221 A1 présente un dispositif autonome destiné à être porté par une roue pour localiser la position droite ou gauche de la roue dans un véhicule comportant :
- deux capteurs magnétiques avec des axes de sensibilité maximale ;
- des moyens de mesure d'un signal aux bornes de chacun des capteurs magnétiques, aptes à délivrer deux signaux périodiques déphasés l'un par rapport à l'autre et représentatifs chacun des variations temporelles de flux magnétique détectées par les capteurs magnétiques pendant la rotation de la roue ; et
- une unité de calcul programmée pour déterminer, à partir du déphasage entre les deux signaux périodiques, le sens de rotation de la roue.

La connaissance du sens de rotation de la roue permet de déduire, le sens de déplacement du véhicule étant connu par ailleurs, la localisation droite ou gauche de la roue.

Ce dispositif est tel que les axes de sensibilité maximale des deux capteurs magnétiques sont destinés à être placés dans l'ensemble pneumatique et roue dans un plan sécant par rapport à l'axe de rotation de l'ensemble pneumatique et roue, et décalés l'un par rapport à l'autre, dans ce plan sécant, d'un angle prédéterminé.

Les deux capteurs de ce dispositif détectent le champ magnétique global qui les entoure, composé du champ magnétique terrestre additionné du champ magnétique environnemental véhicule. Ce champ magnétique environnemental véhicule est la résultante d'un ensemble de champs véhicules créés par la présence d'équipements électriques ou magnétiques embarqués dans le véhicule ainsi que par les pièces métalliques proches des passages de roues tels les étriers de freins et les éléments de liaison au sol.

Il existe cependant des points du globe terrestre et des directions de déplacement du véhicule pour lesquelles la contribution du champ magnétique terrestre mesurée par les deux capteurs du dispositif précédent devient négligeable relativement à la contribution du champ magnétique environnemental.

Ces dispositifs ne permettent de localiser que la position gauche ou droite d'une roue sur un véhicule mais non la position avant ou arrière. Les documents EP 1 800 913 A1 et FR 2 888 656 A1 décrivent des dispositifs et des procédés similaires, en particulier les préambules respectifs des revendications 1, 17 et 18 s'appuyent sur EP 1 800 913 A1.

La demande WO 2006/104484 divulgue un dispositif et un procédé d'identification de la position d'une roue d'un véhicule dans lesquels chaque passage de roue est équipé de générateurs de champ magnétique spécifiques et chaque roue d'un capteur de champ magnétique. Lors du déplacement du véhicule, chaque capteur de champ magnétique délivre un signal lié aux générateurs de champ magnétique spécifiques de la position de la roue et l'analyse de ce signal permet d'identifier la position avant ou arrière et gauche ou droite de cette roue.

### Description de l'invention

L'invention a pour objet un autre procédé d'identification de la position d'une roue d'un véhicule comprenant les étapes suivantes :
- disposer dans au moins une roue du véhicule un dispositif avec au moins un capteur magnétique avec un axe de sensibilité maximale ;
- mettre en marche le véhicule ;
- mesurer aux bornes du capteur magnétique un signal représentatif des variations temporelles de flux magnétique lors de la rotation de la roue ;
- déterminer une grandeur caractéristique du signal représentatif ;
- comparer ladite grandeur caractéristique à un seuil donné ; et
- déterminer en fonction de ladite comparaison la localisation avant ou arrière de la roue.

Ce procédé utilise la différence usuelle de champ magnétique local entre les passages de roues avant et arrière d'un véhicule pour détecter la position avant ou arrière d'une roue. Le seuil est déterminé par des essais préliminaires pour le véhicule concerné. Ce procédé a l'avantage d'être très aisé à mettre en oeuvre avec des moyens particulièrement simples.

Selon un mode de mise en oeuvre alternatif ou complémentaire :
- on dispose dans au moins une seconde roue du véhicule un dispositif avec au moins un capteur magnétique avec un axe de sensibilité maximale, de telle sorte qu'au moins un dispositif équipe une roue avant et un dispositif équipe une roue arrière du véhicule ;
- on détermine une grandeur caractéristique des signaux pour chaque dispositif ;
- on transmet à une unité centrale du véhicule les grandeurs caractéristiques des signaux de chaque dispositif ; et
- on détermine par comparaison des deux grandeurs caractéristiques la localisation avant ou arrière de chacune des roues.

Ce procédé utilise une comparaison entre les grandeurs caractéristiques de deux signaux pour identifier la position de la roue.

La grandeur caractéristique suivie peut être fonction de l'énergie du signal représentatif.

La grandeur caractéristique peut aussi être obtenue en calculant l'intégrale de la valeur absolue du signal pendant un temps donné.

Pour renforcer la robustesse de l'identification avant ou arrière, on peut ajouter dans le véhicule à proximité d'une roue équipée d'un dispositif, un générateur de champ magnétique, tel un aimant.

On peut aussi renforcer la magnétisation de l'une des pièces métalliques du véhicule, à proximité d'une roue équipée d'un dispositif

Avantageusement, on dispose dans chaque dispositif deux capteurs magnétiques à des azimuts distincts et dans des positions similaires relativement à l'axe de rotation de la roue.

Par « similaires », on entend des positions pratiquement superposables par une rotation autour de l'axe de rotation de la roue. Les positions des deux axes de sensibilité maximale peuvent cependant ne pas être strictement superposables notamment en raison des dispersions de fabrication des dispositifs et de leur mise en place dans la roue pneumatique et roue. L'ampleur des décalages admis par ce vocabulaire de « similaire » est de quelques degrés d'inclinaison l'un par rapport à l'autre.

Les deux capteurs magnétiques sont destinés à être disposés à des azimuts différents. En conséquence, les signaux issus des deux capteurs vont être liés non seulement à leur rotation dans le champ magnétique terrestre mais aussi au fait qu'ils voient successivement le même champ magnétique local.

Avantageusement, chaque dispositif comprend un élément de filtrage adapté pour éliminer les composantes des deux signaux de fréquences inférieures ou égales à une fréquence donnée.

La contribution due au champ magnétique terrestre est périodique et de fréquence identique à celle de la rotation de la roue. En revanche, les signaux provenant des dipôles magnétiques du véhicule (champ local) sont plus localisés ; leurs composantes fréquentielles majeures peuvent ainsi être supérieures à deux fois la fréquence de rotation de l'ensemble pneumatique et roue. En conséquence, l'élément de filtrage introduit dans le dispositif diminue très fortement la contribution aux signaux liée au champ magnétique terrestre ce qui permet une exploitation robuste des signaux liés au champ magnétique environnemental.

Comme précédemment décrit dans EP 1 669 221, les signaux mesurés aux bornes de chaque capteur présentent entre eux un déphasage. Mais les signaux analysés sont principalement liés à la contribution du champ magnétique environnemental du véhicule et non au champ magnétique terrestre et ce déphasage est principalement lié à l'amplitude temporelle du décalage circonférentiel d'azimuts entre les deux capteurs.

L'élément de filtrage peut être un filtre comportant une fréquence de coupure de type passe-haut supérieure à la fréquence de rotation du pneumatique.

Un tel filtre peut être un filtre adaptatif, fonction de la vitesse de rotation de la roue.

Le filtre adaptatif peut être rebouclé sur l'amplitude du signal analysé. Ce mode de rebouclage a l'avantage d'être plus aisé à mettre en oeuvre qu'un rebouclage sur la fréquence de rotation la roue.

Selon un mode de réalisation particulièrement simple et économique, l'élément de filtrage comporte une fréquence de coupure de type passe-haut supérieure à la plage de fréquences de fonctionnement visée du dispositif. A titre d'exemple, pour des pneumatiques de tourisme de dimensions usuelles et pour une plage de fonctionnement visée de 20 à 120 km/h, la plage de fréquences de rotation est alors de l'ordre de 3 à 17 Hz et le filtre doit avoir une fréquence de coupure supérieure à 17 Hz.

L'élément de filtrage comprend aussi de façon préférentielle un filtre de type passe-bas de l'ordre de 100 à 200 Hz. Ce filtre passe-bas permet de diminuer le bruit des signaux analysés.

Avantageusement, les deux capteurs magnétiques sont destinés à être placés sur la roue à sensiblement la même distance de l'axe de rotation de l'ensemble.

Cela permet aux deux bobines d'être sensibles aux variations de flux du même champ environnemental.

Les deux capteurs magnétiques peuvent avoir leurs deux axes de sensibilité maximale confondus ou être destinés à être placés dans la roue avec leurs axes de sensibilité maximale orientés circonférentiellement.

Dans ces deux modes de réalisation très voisins, grâce à la présence de l'élément de filtrage, les signaux après filtrage sont liés principalement aux composantes du champ magnétique environnemental normales à la direction axiale. Ces modes de réalisation peuvent être particulièrement utiles dans certaines configurations de véhicules.

Selon un mode de réalisation préférentiel, les deux capteurs magnétiques sont destinés à être placés dans l'ensemble pneumatique et roue de telle façon que les deux axes de sensibilité maximale sont orientés parallèlement à l'axe de rotation de la roue.

Le fait d'orienter les deux axes de sensibilité maximale des deux capteurs magnétiques parallèlement à l'axe de rotation implique que quelle que soit l'orientation du champ magnétique terrestre, ce champ n'a pratiquement aucune influence sur l'amplitude des signaux mesurés aux bornes des deux capteurs magnétiques. L'amplitude des signaux est alors uniquement liée au champ environnemental entourant le dispositif.

De préférence, la grandeur caractéristique des signaux des deux capteurs magnétiques d'un dispositif est une fonction d'autocorrélation de ces signaux calculée pendant un temps donné.

L'avantage de cette méthode est qu'elle est insensible à la forme des signaux mesurés et qu'elle permet d'accumuler de l'information sur une période suffisamment longue afin d'améliorer le rapport signal à bruit du critère de décision et conduire ainsi à une réponse sans équivoque.

Avantageusement, à partir de la fonction d'autocorrélation des signaux des capteurs magnétiques d'un dispositif et par comparaison à un seuil donné, on détermine la position avant ou arrière de la roue équipée du dispositif.

A partir de la fonction d'autocorrélation, on peut aussi déterminer le déphasage, ou plus simplement le signe de ce déphasage, entre les deux signaux aux bornes des capteurs magnétiques et en déduire le sens de rotation de la roue équipée du dispositif.

Et, en déterminant en plus le sens de déplacement du véhicule, à partir des grandeurs caractéristiques, du sens de rotation de la roue et du sens de déplacement, on détermine la position gauche ou droite et avant ou arrière de la roue équipée du dispositif.

On peut notamment déterminer aisément le sens de déplacement du véhicule par comparaison d'une grandeur caractéristique à un seuil donné. La valeur des grandeurs caractéristiques est en effet fonction de la vitesse du véhicule et au-delà d'une certaine vitesse, on peut être certain que le véhicule est en marche avant.

La localisation gauche ou droite et avant ou arrière peut ainsi être faite au niveau d'un dispositif de roue. On transmet alors à l'unité centrale directement cette localisation.

La localisation peut aussi être effectuée par l'unité centrale disposée dans le véhicule à partir des diverses informations transmises par les dispositifs équipant les roues.

Préférentiellement, la distance circonférentielle entre les centres des deux capteurs magnétiques est comprise entre 1 et 8 cm. Une distance inférieure à 1 cm ne permet plus de déterminer avec suffisamment de précision le déphasage entre les deux signaux avec les fréquences d'acquisition usuelles et une distance supérieure à 8 cm rend difficile l'intégration des deux capteurs magnétiques dans un boîtier unique.

Les dispositifs peuvent notamment être adaptés pour être fixés sur une valve de gonflage de la roue.

L'invention a aussi pour objet un système de surveillance des roues d'un véhicule comprenant :
- pour chaque roue, un dispositif avec :
   - au moins un capteur magnétique avec un axe de sensibilité maximale ;
   - des moyens de mesure aux bornes du capteur magnétique d'un signal représentatif des variations temporelles de flux magnétique lors de la rotation de la roue ;
   - une unité de calcul ;
   - un émetteur ;
- dans le véhicule, une unité centrale avec un récepteur et une unité de traitement.

Ce système est caractérisé en ce que le capteur magnétique d'un dispositif a son axe de sensibilité maximale disposé parallèlement à l'axe de rotation de la roue, en ce que l'unité de calcul de chaque dispositif est apte à calculer une grandeur caractéristique fonction de l'énergie du signal mesuré aux bornes du capteur magnétique du dispositif et en ce que l'unité de traitement de l'unité centrale est apte à déterminer à partir des grandeurs caractéristiques transmises par les dispositifs de chacune des roues du véhicule les localisations avant ou arrière de chacun des dispositifs du véhicule.

L'invention a aussi pour objet un système de surveillance des roues d'un véhicule comprenant :
- pour chaque roue, un dispositif avec :
   - deux capteurs magnétiques avec des axes de sensibilité maximale ;
   - des moyens de mesure aux bornes de chacun des capteurs magnétiques d'un signal représentatif des variations temporelles de flux magnétique lors de la rotation de la roue ;
   - une unité de calcul ;
   - un émetteur ;
- dans le véhicule, une unité centrale avec un récepteur et une unité de traitement.

Ce système est caractérisé en ce que les deux capteurs magnétiques d'un dispositif sont disposés à des azimuts distincts et des positions similaires relativement à l'axe de rotation de la roue, en ce que l'unité de calcul de chaque dispositif est apte à calculer une fonction d'autocorrélation des signaux mesurés aux bornes des deux capteurs magnétiques du dispositif et en ce que l'unité de traitement de l'unité centrale est apte à déterminer à partir des fonctions d'autocorrélation transmise par les dispositifs de chacune des roues du véhicule les localisations avant-arrière et gauche-droite de chacun des dispositifs.

### Description brève des dessins

L'invention sera mieux comprise grâce à la description des dessins selon lesquels :
- la figure 1 représente schématiquement une vue en perspective d'une roue de l'art antérieur, équipée d'un système de capteurs solidaire de la valve de gonflage ;
- la figure 2 représente schématiquement une vue en coupe d'une roue de l'art antérieur équipée d'un système de capteurs solidaire de la valve de gonflage ;
- la figure 3 représente schématiquement une vue en perspective d'une valve de gonflage et d'un boîtier solidaire de la valve destiné à accueillir des capteurs ;
- la figure 4 représente schématiquement une vue de dessus d'un véhicule équipé de dispositifs selon l'invention ;
- la figure 5 représente schématiquement une vue de côté d'une roue équipée d'un dispositif selon l'invention, montée sur le côté droit d'un véhicule ;
- la figure 6 représente schématiquement une vue de côté d'une roue équipée d'un dispositif selon l'invention, montée sur le côté gauche d'un véhicule ;
- la figure 7 représente la composante axiale du champ magnétique ponctuel rémanent mesurée sur un essieu arrière de véhicule ;
- la figure 8 (a) et (b) représente les signaux obtenus sur un véhicule dont les pneumatiques sont équipés d'un dispositif selon l'invention, avant traitement numérique ;
- la figure 9 présente un schéma fonctionnel d'un dispositif selon l'invention ;
- la figure 10 présente l'évolution de deux grandeurs caractéristiques des signaux aux bornes d'un capteur magnétique pour un premier véhicule ;
- la figure 11 présente une évolution similaire à celle de la figure 10 dans le cas d'un second véhicule ;
- la figure 12 présente une évolution similaire à celle de la figure 11 dans le cas d'un second véhicule dans lequel le champ magnétique local arrière a été renforcé ;
- la figure 13 présente l'évolution de deux autres grandeurs caractéristiques de signaux dans le cas du premier véhicule ;
- la figure 14 est similaire à la figure 13 dans le cas du second véhicule ; et
- la figure 15 présente un schéma fonctionnel d'un second dispositif selon l'invention.

Ces figures illustrent le mode de réalisation d'un dispositif dans lequel les capteurs magnétiques ont leurs directions de sensibilité maximale orientées axialement, mais s'appliquent aussi aux autres modes de réalisation revendiqués. Elles sont données dans un but purement illustratif et n'ont aucun caractère limitatif.

### Description de modes de réalisation

Dans ce qui suit, on entend par « roue » un ensemble constitué d'une roue au sens particulier avec son disque et sa jante et d'un pneumatique monté sur la jante de la roue.

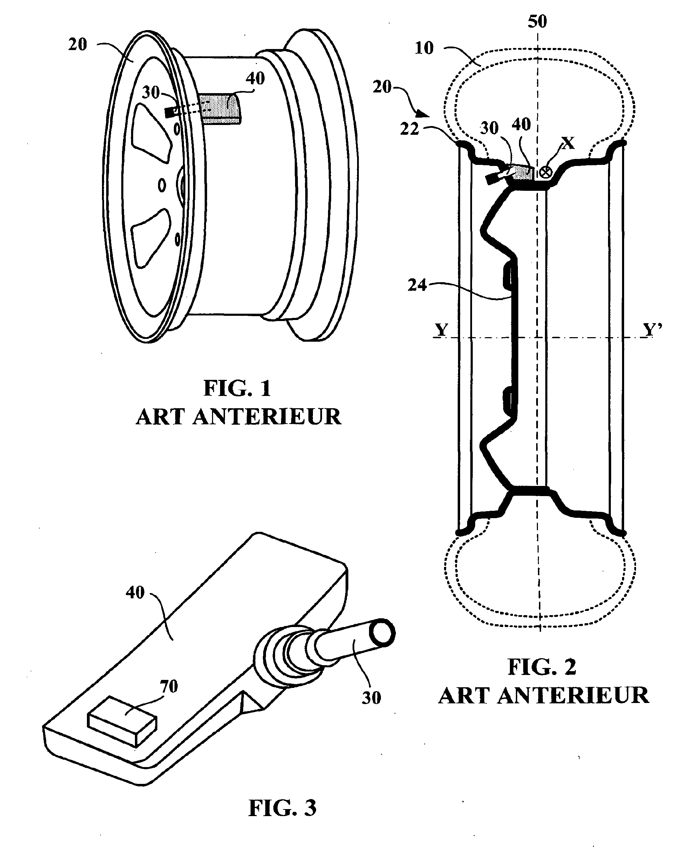

La figure 1 représente une vue en perspective d'une roue 20 de l'art antérieur, équipée d'une valve de gonflage 30 et d'un boîtier 40 prévu pour recevoir des capteurs. Dans un souci de clarté, le pneumatique 10 n'est pas représenté.

La figure 2 représente une vue en coupe d'une autre roue 20 de l'art antérieur, comportant une jante 22, un disque 24, un pneumatique 10. Cette roue est équipée d'une valve de gonflage 30 et d'un boîtier 40 prévu pour recevoir des capteurs. La trace du plan médian 50 du pneumatique, celle de la direction circonférentielle ou tangentielle X au niveau du boîtier 40 ainsi que celle de l'axe de rotation YY' de la roue sont également représentées.

La figure 3 représente schématiquement une vue en perspective d'une valve de gonflage 30 et d'un boîtier 40 solidaire de la valve et destiné à accueillir des capteurs ; un tel boîtier est connu, par exemple, de EP 1 106 397. Il peut être adapté pour recevoir un dispositif 70 selon l'invention.

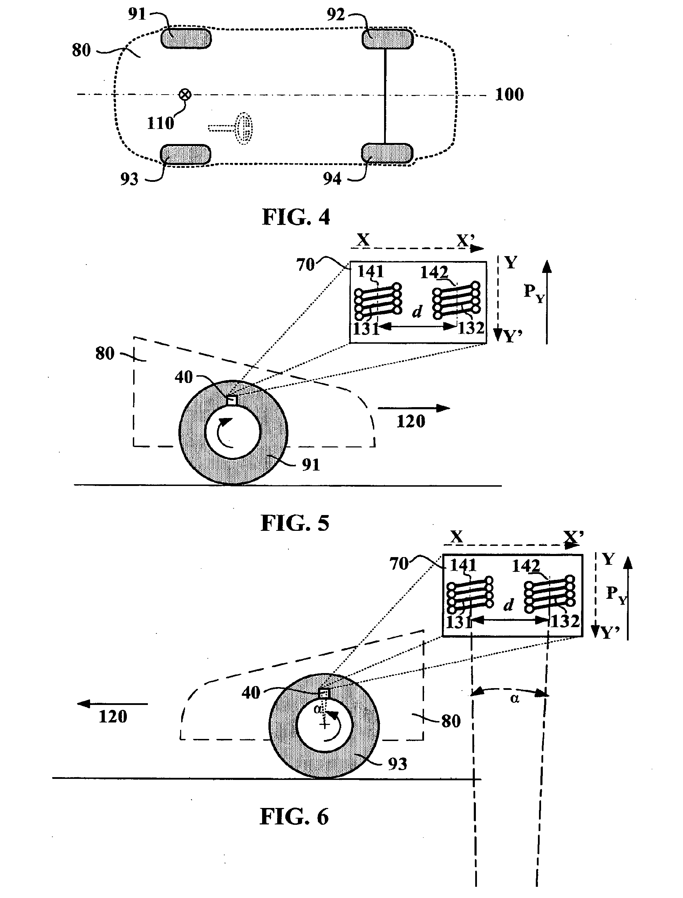

La figure 4 représente schématiquement une vue de dessus d'un véhicule 80 dont les roues 91 à 94 sont équipées de dispositifs selon l'invention comportant deux capteurs magnétiques sensibles au champ magnétique environnemental véhicule, les deux capteurs magnétiques étant disposés de manière à ce que leurs axes soient parallèles et décalés circonférentiellement.

Le transfert d'une roue du côté gauche au côté droit du véhicule en gardant le même côté de la roue à l'extérieur par rapport au véhicule, s'analyse comme une rotation, éventuellement suivie d'une translation. Ainsi, si l'on remplace la roue 91 ou la roue 92 par la roue 93, cette dernière est tournée de 180° autour d'un axe 110 perpendiculaire au sol (pour atteindre la position de la roue 91) puis décalé en translation (si la position 92 est visée). La disposition particulière des capteurs magnétiques a pour conséquence de réduire la symétrie rotatoire du dispositif, de sorte que la configuration relative des capteurs magnétiques est différente d'un côté du véhicule à l'autre. Même la rotation de la roue autour de son axe de rotation en cours de roulage ne permet pas d'obtenir la même configuration relative des capteurs magnétiques sur les deux côtés du véhicule. Cette configuration relative est donc caractéristique de chaque côté du véhicule.

Ce constat fondamental est illustré aux figures 5 et 6 qui représentent des vues de côté de roues équipées d'un dispositif 70 selon l'invention, monté sur le côté droit (figure 5) et gauche (figure 6) du véhicule.

La figure 5 représente une roue 91 monté sur la position avant du côté droit du véhicule 80 qui avance dans la direction 120, indiquée par une flèche. Un dispositif 70 selon l'invention est monté dans un boîtier 40 et fixé sur l'ensemble 91. Le dispositif comporte deux capteurs magnétiques 131 et 132 sensibles au champ magnétique environnemental véhicule P. Chaque capteur magnétique comporte une bobine avec un noyau en fer doux. Les deux bobines 131 et 132 sont disposées avec leurs deux axes, respectivement 141 et 142, orientés parallèlement à l'axe de rotation de l'ensemble pneumatique et roue YY'. Les deux bobines sont ainsi sensibles pratiquement uniquement à la composante selon YY' ou composante axiale du champ magnétique environnemental véhicule *P_{Y}.* Les deux axes 141 et 142 sont aussi décalés circonférentiellement, c'est-à-dire dans la direction XX', d'une distance d. Le décalage en azimut α correspondant est illustré à la figure 6.

La figure 6 représente une roue 93 montée sur la position avant du côté gauche du véhicule 80 qui avance dans la direction 120. Le même dispositif selon l'invention est monté dans un boîtier 40 et fixé de la même façon sur l'ensemble 93.

La comparaison des figures 5 et 6 permet de comprendre le fonctionnement du dispositif d'autolocalisation gauche droite. Lorsque la roue pourvue du dispositif 70 est montée sur le côté droit du véhicule (cas de la figure 5) et lorsque le véhicule avance, la bobine 132 est toujours en avance de phase sur la bobine 131 : il faut que là roue effectue une rotation d'un certain angle autour de son axe de rotation pour que la bobine 131 se trouve dans la même position par rapport au champ magnétique environnemental véhicule que la bobine 132 initialement. La situation est inversée pour une roue pourvue du dispositif monté sur le côté gauche du véhicule (cas de la figure 6) : ici, c'est la bobine 131 qui est en avance de phase sur la bobine 132. Il suffit donc de déterminer le déphasage relatif des signaux mesurés par les deux bobines pour connaître, pour une direction de mouvement donnée (avant ou arrière) du véhicule, le côté du véhicule sur lequel se trouvent les bobines et ainsi les roues correspondantes.

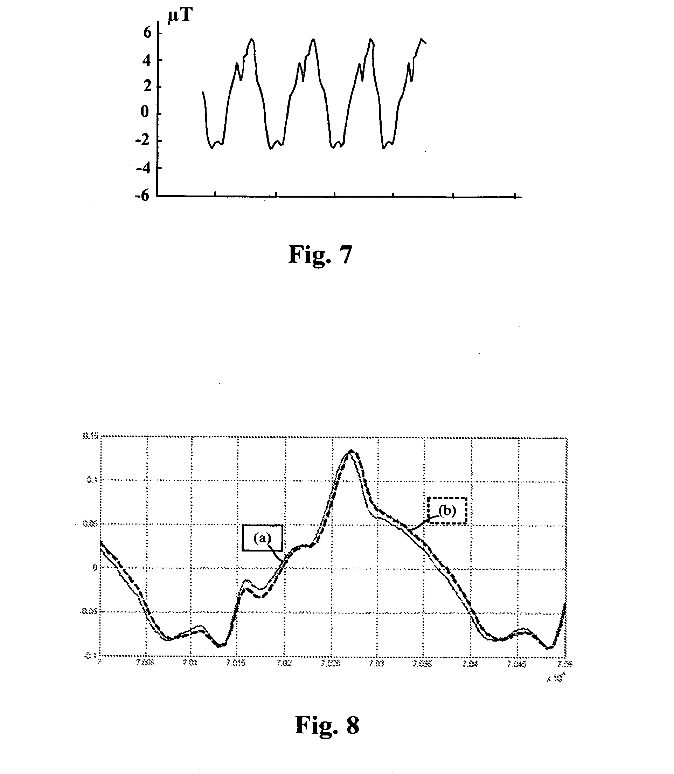

La figure 7 représente la composante orienté selon l'axe YY' du champ magnétique environnemental véhicule mesuré avec un magnétomètre fixé sur la jante d'une roue. Cette courbe est mesurée dans le cas d'un essieu arrière d'un véhicule de marque « BMW » et de type « 323i ».

Le magnétomètre est fixé à la jante de la roue dans une position très proche de celle d'un dispositif fixé à la valve de cette roue. On voit que le champ environnemental véhicule pour l'essieu arrière de ce véhicule particulier et apprécié au niveau d'un boîtier fixé à une valve de gonflage a une amplitude crête-crête de l'ordre de 9 µT.

Chaque bobine est un capteur magnétique passif qui produit un signal proportionnel à la variation du flux magnétique qui la traverse selon la loi de Faraday-Lenz. Le signal généré par chaque bobine est d'autant plus ample que les variations de flux magnétique traversant la bobine sont plus fortes et plus rapides : son amplitude dépend donc aussi de la vitesse de rotation de la bobine. Dans un mode de réalisation particulier on intègre la valeur du signal pour retrouver la valeur du champ et s'affranchir de l'effet vitesse.

La figure 8 représente les signaux mesurés aux bornes des deux bobines 131 et 132 en fonction de l'angle de rotation de la roue (en degrés). Chaque bobine produit un signal périodique dont la périodicité est celle de la rotation de la roue ; la fréquence dépend donc de la vitesse du véhicule. Les valeurs extrêmes sont atteintes lorsque le champ magnétique environnemental véhicule est aligné avec l'axe de la bobine correspondante. L'amplitude du signal est indépendante du positionnement terrestre du véhicule. Le déphasage est lié à l'angle alpha (α), correspondant à l'angle que forment les deux centres des bobines par rapport à l'axe de rotation. A titre d'exemple, un décalage de 2 cm par rapport à une circonférence de 100 cm représente un angle de 2 / 100 * 360° = 7,2°.

Les courbes 8(a) et 8(b) montrent les signaux mesurés aux bornes des bobines 131 et 132 d'un dispositif 70 placé sur une roue dans des conditions telles que représentées à la figure 6 : le signal correspondant à la bobine 132 est en retard de phase par rapport à celui correspondant à la bobine 131. La situation serait inversée dans le cas de la situation présentée à la figure 5 où le signal de la bobine 132 serait en avance de phase par rapport au signal de la bobine 131. Pour un sens de mouvement donné, il est donc possible de déterminer le côté sur lequel se trouve la roue à partir du déphasage relatif des signaux mesurés par les deux bobines (ou, en d'autres termes, à partir du signe du déphasage des signaux).

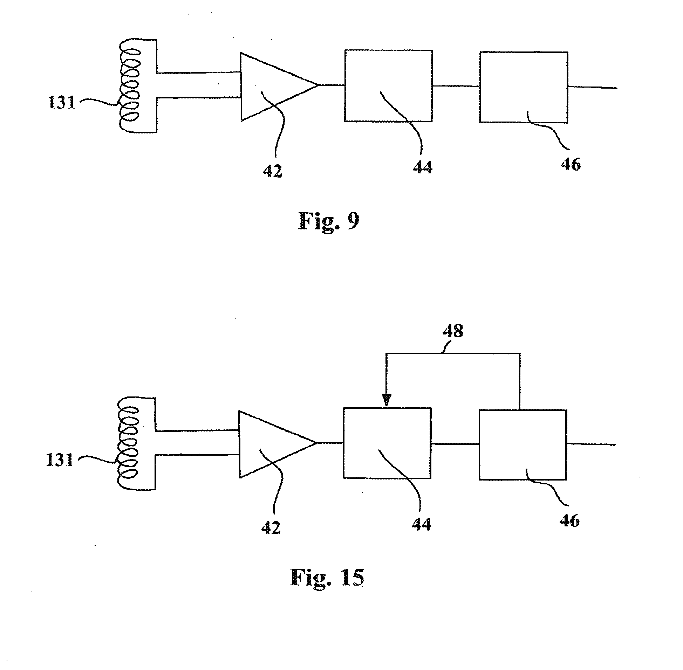

La figure 9 présente un premier schéma fonctionnel du dispositif 70. Pour la mesure et le traitement de la différence de potentiel aux bornes de chaque bobine 131, 132, le dispositif comprend un module d'amplification 42 et un module de mise en forme 44 incluant un filtre comportant une fréquence de coupure de type passe-haut égale à 19 Hz et un comparateur. Le dispositif comprend en plus une unité de calcul 46 vers laquelle est dirigée le signal mis en forme.

L'unité de calcul peut effectuer plusieurs traitements successivement ou alternativement.

Selon un premier traitement, l'unité de calcul 46 calcule une grandeur caractéristique fonction de l'énergie du signal, par exemple l'intégrale du carré du signal de l'une des bobines pendant un temps donné, et en déduit la pente de cette valeur en fonction du temps.

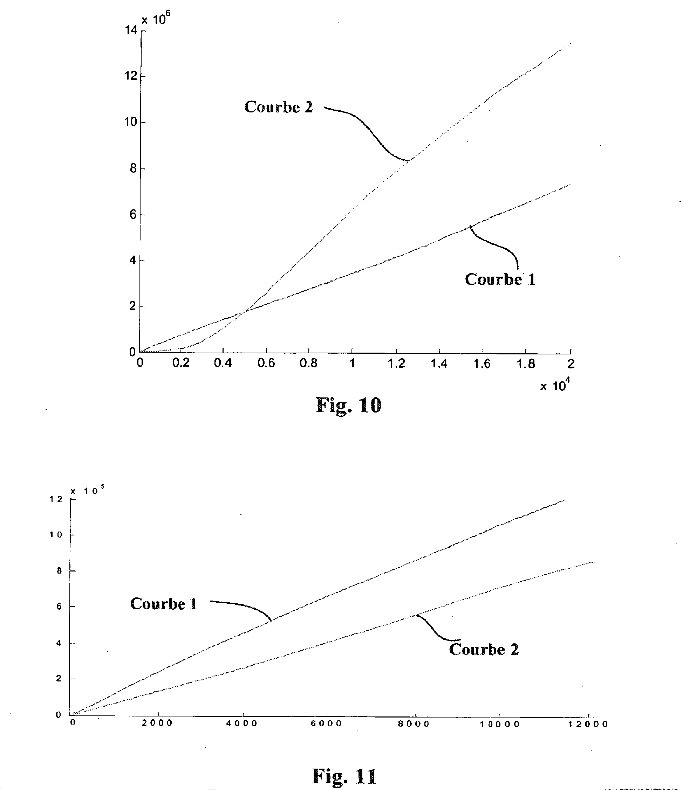

La figure 10 donne l'évolution en fonction du temps de cette intégrale dans le cas d'un véhicule de marque « BMW » roulant à 40 km/heure en ligne droite. Les unités de la figure sont les suivantes : en abscisse, une unité arbitraire de temps (nombre de points d'acquisition) et en ordonnée une unité arbitraire de tension aux bornes d'une bobine. Courbe 1 : grandeur caractéristique d'une roue avant ; courbe 2 : grandeur caractéristique d'une roue arrière.

On constate que la pente moyenne est de l'ordre de 3 10² pour la roue avant et de l'ordre de 8 10² pour la roue arrière. On obtient une différence d'un facteur 2,7 en faveur de l'arrière.

Ce résultat illustre que l'on peut aisément déterminer la localisation avant ou arrière d'un dispositif, soit par comparaison entre les deux pentes, soit par dépassement d'un seuil donné.

La figure 11 est similaire à la figure 10 dans le cas d'un véhicule de marque « Citroën » et de type « Saxo ».

On constate que la pente moyenne de la grandeur caractéristique d'une roue avant est de 110, et de 70 pour une roue arrière. Le rapport entre les deux est de l'ordre de 1,6.

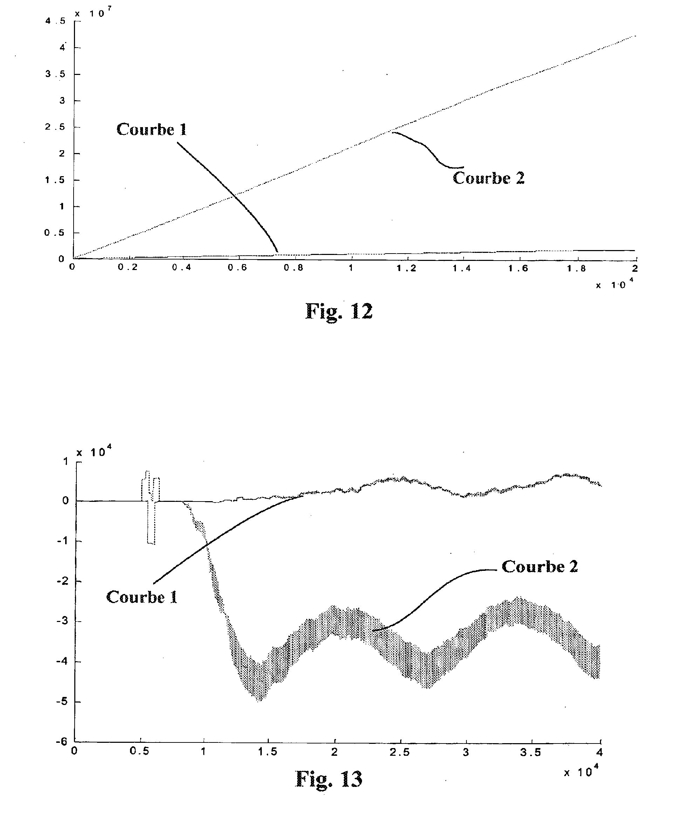

La figure 12 est similaire à la figure 11 dans le cas d'un véhicule de marque « Citroën » et de type « Saxo » dans lequel on a renforcé le champ magnétique environnemental en ajoutant une petit aimant de quelques millimètres de diamètre dans le passage de roue arrière, à proximité du dispositif.

On constate qu'avec cet aimant, la pente moyenne de la grandeur caractéristique devient de l'ordre de 2,2 10³ et on a maintenant un écart de plus d'un ordre de grandeur entre les grandeurs caractéristiques avant et arrière.

Ce renforcement du champ magnétique local est aisé à réaliser et est très efficace. Il peut aussi être effectué en renforçant le magnétisme de l'une des pièces métalliques de la liaison au sol du véhicule, à proximité du passage de roue.

Le dispositif 70 comprend préférentiellement deux bobines. L'unité de calcul 46 peut ainsi déterminer une fonction d'intercorrélation des signaux aux bornes des deux bobines. Le niveau de cette fonction d'autocorrélation est influencé par la richesse du signal à traiter. Plus ce signal est riche et plus la valeur de la fonction est élevée.

La figure 13 illustre les niveaux obtenus des fonctions d'autocorrélation pour un véhicule de marque « BMW » roulant à 40 km/heure sur un cercle. La courbe 1 correspond au signal de la roue avant, la courbe 2 à celui de la roue arrière.

On constate que le niveau moyen de la fonction d'autocorrélation de la roue avant est de l'ordre de 4 10³ alors que celui de la roue arrière est de l'ordre de 4 10⁴. Il y a pratiquement un ordre de grandeur d'écart entre les deux niveaux. Ce résultat est cohérent avec celui donné par l'analyse de l'énergie du signal. Le véhicule de marque « BMW » présente un champ magnétique environnemental plus élevé à l'arrière qu'à l'avant.

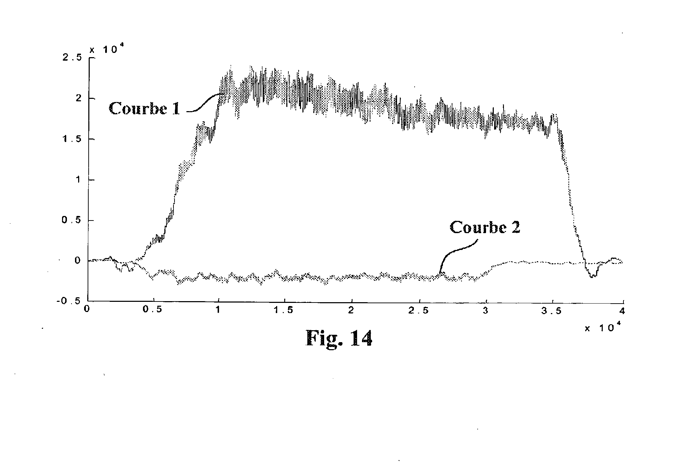

La figure 14 illustre les niveaux obtenus des fonctions d'autocorrélation pour un véhicule de marque « Citroën » et de type « Saxo » roulant à 40 km/heure en ligne droite. Le niveau moyen de la roue avant est de 2 10⁴ et celui de la roue arrière de 2 10³ ; il y a à nouveau pratiquement un ordre de grandeur d'écart. Ce résultat est aussi cohérent avec celui donné par l'analyse de l'énergie du signal. Le véhicule de marque « Citroën » et de type « Saxo » présente un champ magnétique environnemental plus élevé à l'avant qu'à l'arrière.

Le dispositif 70 permet ainsi en appliquant les traitement décrits de localiser la position avant ou arrière d'une roue.

Ce dispositif 70 permet aussi, à partir de l'analyse du signe du déphasage entre les deux signaux, de déterminer le sens de rotation de la roue et déduire de ce sens de rotation et du sens de déplacement du véhicule, déterminé par ailleurs par tout procédé connu en soi, la position droite ou gauche de l'ensemble pneumatique et roue correspondant.

De façon préférentielle, l'unité de calcul du dispositif selon l'invention détermine le signe du déphasage entre les deux signaux issus des deux bobines par intercorrélation de ces deux signaux.

Ce dispositif est adapté pour des pneumatiques de tourisme de dimensions usuelles à une plage de fonctionnement comprise entre 20 et 120 km/h. Pour ces pneumatiques, la plage de fréquences de fonctionnement correspondante est de 3 à 17 Hz. La fréquence de coupure de l'ordre de 19 Hz, avec un filtre adapté aux conditions du véhicule permet de supprimer efficacement l'influence des signaux de fréquence égale à la fréquence de rotation et ainsi l'influence parasite du champ magnétique terrestre.

La figure 15 présente une variante du dispositif 70. Dans cette variante, le module de mise en forme 44 comprend un filtre adaptatif comportant une fréquence de coupure de type passe-haut variable en fonction de la vitesse de rotation de l'ensemble pneumatique et roue. Une boucle 48 relie l'unité de calcul 46 au module de mise en forme des signaux 44 pour indiquer la prise en compte par le filtre adaptatif de la vitesse déterminée par l'unité de mesure. De façon préférentielle, le module de mise en forme est rebouclé sur l'amplitude du signal, cette amplitude est directement fonction de la vitesse. Il est donc très aisé de déterminer la vitesse de rotation à partir de l'amplitude mesurée.

L'information est transmise par radio à une unité centrale embarquée dans le véhicule.

Bien entendu, le principe de l'invention ne peut être exploité de façon fiable dans une méthode pour la détermination de l'emplacement d'une roue que si le dispositif selon l'invention est fixé sur le même côté de la roue par rapport au véhicule pour tous les ensembles 91 à 94 dont le positionnement doit être déterminé. Il importe peu que ce soit toujours le côté extérieur ou toujours le côté intérieur par rapport au véhicule, pourvu que ce soit systématiquement le même côté. La fixation du dispositif sur une valve de gonflage constitue une façon particulièrement simple d'assurer que tous les dispositifs se trouvent sur le côté extérieur par rapport au véhicule.

Il ressort de la description de l'invention que la direction du mouvement est un paramètre important pour identifier l'emplacement gauche ou droite des roues : une inversion de la direction entraîne une inversion du déphasage des signaux des deux bobines 131 et 132. La détermination de la direction du mouvement peut se faire à l'aide d'un dispositif connu (comme par exemple, le dispositif à billes de EP 0 760 299), à l'aide de signaux existants dans le véhicule (alimentation des feux de recul) ou encore à partir de la vitesse du véhicule (qui peut être déterminée à partir de la fréquence du signaux mesurées par chacune des deux bobines 131 et 132) : en désactivant la détermination de l'emplacement lorsque la vitesse est inférieure à une certaine limite (par exemple, 30 km/h), on est certain que le véhicule avance lorsque la détermination est effectuée.

Les méthodes décrites dans ce document permettent ainsi non seulement la détermination du côté du véhicule sur lequel se trouve une roue mais aussi la position précise avant ou arrière du véhicule.

L'invention n'est pas limitée aux exemples décrits et représentés et diverses modifications peuvent y être apportées sans sortir de son cadre défini par les revendications annexées.

## Revendications

1. Procédé d'identification de la position d'une roue (91, 92, 93, 94) d'un véhicule (80) comprenant les étapes suivantes :
- disposer dans au moins une roue (91, 92, 93, 94) du véhicule (80) un dispositif (70) avec au moins un capteur magnétique (131, 132) avec un axe de sensibilité maximale (141, 142) ;
- mettre en marche le véhicule (80) ; et
- mesurer aux bornes du capteur magnétique (131, 132) un signal représentatif des variations temporelles de flux magnétique lors de la rotation de la roue (91, 92, 93, 94);
**caractérisé en ce qu'**il comporte les étapes suivantes
- déterminer une grandeur caractéristique fonction de l'énergie du signal représentatif ;
- comparer ladite grandeur caractéristique à un seuil donné ; et
- déterminer en fonction de ladite comparaison la localisation avant ou arrière de la roue (91, 92, 93, 94).

2. Procédé d'identification selon la revendication 1, dans lequel :
- on dispose dans au moins une seconde roue (91, 92, 93, 94) du véhicule (80) un dispositif (70) avec au moins un capteur magnétique (131, 132) avec un axe de sensibilité maximale (141, 142), de telle sorte qu'au moins un dispositif (70) équipe une roue avant (91, 93) et un dispositif (70) équipe une roue arrière (92, 94) du véhicule ;
- on détermine une grandeur caractéristique des signaux pour chaque dispositif ;
- on transmet à une unité centrale du véhicule lesdites grandeurs caractéristiques des signaux de chaque dispositif ; et
- on détermine par comparaison desdites deux grandeurs caractéristiques la localisation avant ou arrière de chacune des roues.

3. Procédé selon l'une quelconque des revendications 1 et 2, dans lequel la grandeur caractéristique est fonction de l'énergie du signal représentatif.

4. Procédé l'une quelconque des revendications 1 et 2, dans lequel la grandeur caractéristique est obtenue en calculant l'intégrale de la valeur absolue du signal pendant un temps donné.

5. Procédé selon l'une quelconque des revendications 1 à 4, dans lequel on ajoute dans le véhicule (80) à proximité d'une roue équipée d'un dispositif (70) un générateur de champ magnétique.

6. Procédé selon l'une quelconque des revendications 1 à 4, dans lequel on renforce la magnétisation de l'une des pièces métalliques du véhicule, à proximité d'une roue équipée d'un dispositif.

7. Procédé selon l'une quelconque des revendication 1 à 6, dans lequel on dispose dans chaque dispositif deux capteurs magnétiques à des azimuts distincts et dans des positions similaires relativement à l'axe de rotation de la roue.

8. Procédé selon la revendication 7, dans lequel la grandeur caractéristique des signaux des deux capteurs magnétiques d'un dispositif est une fonction d'autocorrélation desdits signaux calculée pendant un temps donné.

9. Procédé selon l'une quelconque des revendications 7 et 8, dans lequel la distance circonférentielle entre les centres des deux capteurs magnétiques est comprise entre 1 et 8 cm.

10. Procédé selon l'une quelconque des revendications 7 à 9, dans lequel les deux capteurs magnétiques (131, 132) ont leurs axes de sensibilité maximale (141, 142) sensiblement orientés circonférentiellement.

11. Procédé selon l'une quelconque des revendications 7 à 9, dans lequel les deux capteurs magnétiques (131, 132) ont leurs axes de sensibilité maximale (141, 142) sensiblement orientés parallèlement à l'axe de rotation de la roue.

12. Procédé selon l'une quelconque des revendications 7 à 11, dans lequel, à partir de la fonction d'autocorrélation des signaux des capteurs magnétiques d'un dispositif et par comparaison à un seuil donné, on détermine la position avant ou arrière dudit dispositif.

13. Procédé selon l'une quelconque des revendications 7 à 12, dans lequel, à partir de la fonction d'autocorrélation des signaux des capteurs magnétiques d'un dispositif, on détermine le sens de rotation de la roue dudit dispositif

14. Procédé selon la revendication 13, dans lequel on détermine le sens de déplacement du véhicule par comparaison de ladite grandeur caractéristique à un seuil donné, et dans lequel à partir des grandeurs caractéristiques et dudit sens de déplacement, on détermine la position gauche ou droite et avant ou arrière dudit dispositif du véhicule.

15. Procédé selon la revendication 13, dans lequel, on détermine le sens de déplacement du véhicule et à partir des grandeurs caractéristiques transmises par le dispositif de chaque roue du véhicule et dudit sens de déplacement, on détermine la position gauche ou droite et avant ou arrière de chaque dispositif du véhicule.

16. Procédé selon l'une quelconque des revendications 1 à 15, dans lequel chaque dispositif comprend un élément de filtrage (44) adapté pour éliminer les composantes desdits deux signaux de fréquences inférieures ou égales à une fréquence donnée.

17. Système de surveillance des roues d'un véhicule comprenant :
- pour chaque roue (91, 92, 93, 94), un dispositif (70) avec :
• au moins un capteur magnétique (131, 132) avec un axe de sensibilité maximale (141, 142);
• des moyens de mesure aux bornes du capteur magnétique d'un signal représentatif des variations temporelles de flux magnétique lors de la rotation de la roue ;
• une unité de calcul ;
• un émetteur ;
- dans le véhicule, une unité centrale avec un récepteur et une unité de traitement ; **caractérisé en ce que** le capteur magnétique (131, 132) d'un dispositif (70) a son axe de sensibilité maximale (141, 142) disposé parallèlement à l'axe de rotation de la roue, **en ce que** l'unité de calcul de chaque dispositif est apte à calculer une grandeur caractéristique fonction de l'énergie du signal mesuré aux bornes du capteur magnétique du dispositif et **en ce que** l'unité de traitement de l'unité centrale est apte à déterminer à partir des grandeurs caractéristiques transmises par les dispositifs de chacune des roues du véhicule les localisations avant ou arrière de chacun des dispositifs du véhicule.

18. Système de surveillance des roues d'un véhicule comprenant :
- pour chaque roue, un dispositif (70) avec :
• deux capteurs magnétiques (131, 132) avec des axes de sensibilité maximale (141, 142) ;
• des moyens de mesure aux bornes de chacun des capteurs magnétiques d'un signal représentatif des variations temporelles de flux magnétique lors de la rotation de la roue ;
• une unité de calcul ;
• un émetteur ;
- dans le véhicule, une unité centrale avec un récepteur et une unité de traitement ; **caractérisé en ce que** les deux capteurs magnétiques d'un dispositif sont disposés à des azimuts distincts et des positions similaires relativement à l'axe de rotation de la roue, **en ce que** l'unité de calcul de chaque dispositif est apte à calculer une fonction d'autocorrélation des signaux mesurés aux bornes des deux capteurs magnétiques du dispositif et **en ce que** l'unité de traitement de l'unité centrale est apte à déterminer à partir des fonctions d'autocorrélation transmise par les dispositifs de chacune des roues du véhicule les localisations avant ou arrière et gauche ou droite de chacun des dispositifs du véhicule.

## Patentansprüche

1. Verfahren zur Erkennung der Stellung eines Rads (91, 92, 93, 94) eines Fahrzeugs (80), das die folgenden Schritte enthält:
- Anordnen einer Vorrichtung (70) mit mindestens einem Magnetfühler (131, 132) mit einer Achse maximaler Empfindlichkeit (141, 142) in mindestens einem Rad (91, 92, 93, 94) des Fahrzeugs (80);
- Starten des Fahrzeugs (80); und
- Messen eines für die zeitlichen Magnetflussänderungen bei der Drehung des Rads (91, 92, 93, 94) repräsentativen Signals an den Klemmen des Magnetfühlers (131, 132);
**dadurch gekennzeichnet, dass** es die folgenden Schritte aufweist:
- Bestimmen einer Kenngröße abhängig von der Energie des repräsentativen Signals;
- Vergleich der Kenngröße mit einer gegebenen Schwelle; und
- Bestimmen der vorderen oder hinteren Lokalisierung des Rads (91, 92, 93, 94) abhängig vom Vergleich.

2. Erkennungsverfahren nach Anspruch 1, wobei:
- in mindestens einem zweiten Rad (91, 92, 93, 94) des Fahrzeugs (80) eine Vorrichtung (70) mit mindestens einem Magnetfühler (131, 132) mit einer maximalen Empfindlichkeitsachse (141, 142) angeordnet wird, so dass mindestens eine Vorrichtung (70) ein Vorderrad (91, 93) und eine Vorrichtung (70) ein Hinterrad (92, 94) des Fahrzeugs ausstattet;
- für jede Vorrichtung eine Kenngröße der Signale festgelegt wird;
- die Kenngrößen der Signale jeder Vorrichtung an eine Zentraleinheit des Fahrzeugs übertragen werden; und
- die vordere oder hintere Lokalisierung jedes der Räder durch Vergleich der zwei Kenngrößen festgelegt wird.

3. Verfahren nach einem der Ansprüche 1 und 2, wobei die Kenngröße von der Energie des repräsentativen Signals abhängt.

4. Verfahren nach einem der Ansprüche 1 und 2, wobei die Kenngröße durch Berechnung des Integrals des Absolutwerts des Signals während eines gegebenen Zeitraums erhalten wird.

5. Verfahren nach einem der Ansprüche 1 bis 4, wobei ein Magnetfelderzeuger im Fahrzeug (80) in der Nähe eines mit einer Vorrichtung (70) ausgestatteten Rads hinzugefügt wird.

6. Verfahren nach einem der Ansprüche 1 bis 4, wobei die Magnetisierung eines der metallischen Bauteile des Fahrzeugs in der Nähe eines mit einer Vorrichtung ausgestatteten Rads verstärkt wird.

7. Verfahren nach einem der Ansprüche 1 bis 6, wobei in jeder Vorrichtung zwei Magnetfühler an unterschiedlichen Azimuten und in ähnlichen Stellungen bezüglich der Drehachse des Rads angeordnet werden.

8. Verfahren nach Anspruch 7, wobei die Kenngröße der Signale der zwei Magnetfühler einer Vorrichtung eine während eines vorbestimmten Zeitraums berechnete Autokorrelationsfunktion der Signale ist.

9. Verfahren nach einem der Ansprüche 7 und 8, wobei der Umfangsabstand zwischen den Zentren der zwei Magnetfühler zwischen 1 und 8 cm liegt.

10. Verfahren nach einem der Ansprüche 7 bis 9, wobei die Achsen maximaler Empfindlichkeit (141, 142) der zwei Magnetfühler (131, 132) im Wesentlichen in Umfangsrichtung ausgerichtet sind.

11. Verfahren nach einem der Ansprüche 7 bis 9, wobei die Achsen maximaler Empfindlichkeit (141, 142) der zwei Magnetfühler (131, 132) im Wesentlichen parallel zur Drehachse des Rads ausgerichtet sind.

12. Verfahren nach einem der Ansprüche 7 bis 11, wobei ausgehend von der Autokorrelationsfunktion der Signale der Magnetfühler einer Vorrichtung und durch Vergleich mit einer gegebenen Schwelle die vordere oder hintere Stellung der Vorrichtung festgestellt wird.

13. Verfahren nach einem der Ansprüche 7 bis 12, wobei ausgehend von der Autokorrelationsfunktion der Signale der Magnetfühler einer Vorrichtung die Drehrichtung des Rads der Vorrichtung festgestellt wird.

14. Verfahren nach Anspruch 13, wobei die Fahrtrichtung des Fahrzeugs durch Vergleich der Kenngröße mit einer gegebenen Schwelle festgestellt wird, und wobei ausgehend von den Kenngrößen und der Fahrtrichtung die linke oder rechte und vordere oder hintere Stellung der Vorrichtung des Fahrzeugs festgestellt wird.

15. Verfahren nach Anspruch 13, wobei die Fahrtrichtung des Fahrzeugs festgestellt wird, und ausgehend von den von der Vorrichtung jedes Rads des Fahrzeugs übertragenen Kenngrößen und der Fahrtrichtung die linke oder rechte und vordere oder hintere Stellung jeder Vorrichtung des Fahrzeugs festgestellt wird.

16. Verfahren nach einem der Ansprüche 1 bis 15, wobei jede Vorrichtung ein Filterelement (44) enthält, das geeignet ist, um die Komponenten der zwei Signale zu entfernen, die niedrigere oder gleiche Frequenzen wie eine gegebene Frequenz haben.

17. Überwachungssystem der Räder eines Fahrzeugs, das enthält:
- für jedes Rad (91, 92, 93, 94) eine Vorrichtung (70) mit:
• mindestens einem Magnetfühler (131, 132) mit einer Achse maximaler Empfindlichkeit (141, 142);
• Einrichtungen zur Messung eines für die zeitlichen Magnetflussänderungen bei der Drehung des Rads repräsentativen Signals an den Klemmen des Magnetfühlers;
• eine Recheneinheit;
• einen Sender;
- im Fahrzeug eine Zentraleinheit mit einem Empfänger und eine Verarbeitungseinheit;
**dadurch gekennzeichnet, dass** die Achse maximaler Empfindlichkeit (141, 142) des Magnetfühlers (131, 132) einer Vorrichtung (70) parallel zur Drehachse des Rads angeordnet ist, dass die Recheneinheit jeder Vorrichtung eine Kenngröße abhängig von der Energie des an den Klemmen des Magnetfühlers der Vorrichtung gemessenen Signals berechnen kann, und dass die Verarbeitungseinheit der Zentraleinheit ausgehend von den von den Vorrichtungen jedes der Räder des Fahrzeugs übertragenen Kenngrößen die vorderen oder hinteren Lokalisierungen jeder der Vorrichtungen des Fahrzeugs feststellen kann.

18. Überwachungssystem der Räder eines Fahrzeugs, das enthält:
- für jedes Rad eine Vorrichtung (70) mit:
• zwei Magnetfühlern (131, 132) mit Achsen maximaler Empfindlichkeit (141, 142);
• Einrichtungen zur Messung eines für die zeitlichen Magnetflussänderungen bei der Drehung des Rads repräsentativen Signals an den Klemmen jedes der Magnetfühler;
• eine Recheneinheit;
• einen Sender;
- im Fahrzeug eine Zentraleinheit mit einem Empfänger und eine Verarbeitungseinheit;
**dadurch gekennzeichnet, dass** die zwei Magnetfühler einer Vorrichtung an unterschiedlichen Azimuten und in ähnlichen Stellungen bezüglich der Drehachse des Rads angeordnet sind, dass die Recheneinheit jeder Vorrichtung eine Autokorrelationsfunktion der an den Klemmen der zwei Magnetfühler der Vorrichtung gemessenen Signale berechnen kann, und dass die Verarbeitungseinheit der Zentraleinheit ausgehend von den von den Vorrichtungen jedes der Räder des Fahrzeugs übertragenen Autokorrelationsfunktionen die vorderen oder hinteren und rechten oder linken Lokalisierungen jeder der Vorrichtungen des Fahrzeugs feststellen kann.

## Claims

1. Method of identifying the position of a wheel of a vehicle comprising the following steps:
- having, in at least one wheel of the vehicle, a device with at least one magnetic sensor with a maximum sensitivity axis;
- starting up the vehicle;
- measuring at the terminals of the magnetic sensor a signal representative of the magnetic flux time variations during rotation of the wheel;
- determining a characteristic quantity dependent on the energy of the representative signal;
- comparing said characteristic quantity to a given threshold; and
- determining, according to said comparison, the front or rear location of the wheel.

2. Identification method according to Claim 1, in which:
- there is, in at least one second wheel of the vehicle, a device with at least one magnetic sensor with a maximum sensitivity axis, such that at least one device is fitted on a front wheel and one device is fitted on a rear wheel of the vehicle;
- a characteristic quantity of the signals is determined for each device;
- said characteristic quantities of the signals from each device are transmitted to a central processing unit of the vehicle; and
- the front or rear location of each of the wheels is determined by comparing said two characteristic quantities.

3. Method according to either of Claims 1 and 2, in which the characteristic quantity is dependent on the energy of the representative signal.

4. Method according to either of Claims 1 and 2, in which the characteristic quantity is obtained by calculating the integral of the absolute value of the signal during a given time.

5. Method according to any one of Claims 1 to 4, in which a magnetic field generator is added in the vehicle close to a wheel fitted with a device.

6. Method according to any one of Claims 1 to 4, in which the magnetization of one of the metal parts of the vehicle is reinforced, close to a wheel fitted with a device.

7. Method according to any one of Claims 1 to 6, in which, there are, in each device, two magnetic sensors with different azimuth angles and in similar positions relative to the axis of rotation of the wheel.

8. Method according to Claim 7, in which the characteristic quantity of the signals from the two magnetic sensors of a device is a self-correlation function of said signals calculated during a given time.

9. Method according to either of Claims 7 and 8, in which the circumferential distance between the centres of the two magnetic sensors is between 1 and 8 cm.

10. Method according to any one of Claims 7 to 9, in which the two magnetic sensors have their maximum sensitivity axes substantially circumferentially oriented.

11. Method according to any one of Claims 7 to 9, in which the two magnetic sensors have their maximum sensitivity axes substantially oriented parallel to the axis of rotation of the wheel.

12. Method according to any one of Claims 7 to 11, in which, from the self-correlation function of the signals from the magnetic sensors of a device, and by comparison to a given threshold, the front or rear position of said device is determined.

13. Method according to any one of Claims 7 to 12, in which, from the self-correlation function of the signals from the magnetic sensors of a device, the direction of rotation of the wheel of said device is determined.

14. Method according to Claim 13, in which the direction of movement of the vehicle is determined by comparing said characteristic quantity to a given threshold, and in which, from the characteristic quantities and from said direction of movement, the left or right and front or rear position of said device of the vehicle is determined.

15. Method according to Claim 13, in which the direction of movement of the vehicle is determined and, from the characteristic quantities transmitted by the device of each wheel of the vehicle and from said direction of movement, the left or right and front or rear position of each device of the vehicle is determined.

16. Method according to any one of Claims 1 to 15, in which each device includes a filtering element designed to eliminate the components of said two signals that have frequencies less than or equal to a given frequency.

17. System for monitoring the wheels of a vehicle comprising:
- for each wheel, a device with:
• at least one magnetic sensor with a maximum sensitivity axis;
• means of measuring, at the terminals of the magnetic sensor, a signal representative of the magnetic flux time variations during rotation of the wheel;
• a computation unit;
• a transmitter;
- in the vehicle, a central processing unit with a receiver and a processing unit; **characterized in that** the magnetic sensor of a device has its maximum sensitivity axis arranged parallel to the axis of rotation of the wheel, **in that** the computation unit of each device is able to calculate a characteristic quantity that is a function of the energy of the signal measured at the terminals of the magnetic sensor of the device and **in that** the processing unit of the central processing unit is able to determine, from the characteristic quantities transmitted by the devices of each of the wheels of the vehicle, the front or rear locations of each of the devices of the vehicle.

18. System for monitoring the wheels of a vehicle comprising:
- for each wheel, a device with:
• two magnetic sensors with maximum sensitivity axes;
• means of measuring, at the terminals of each of the magnetic sensors, a signal representative of the magnetic flux time variations during rotation of the wheel;
• a computation unit;
• a transmitter;
- in the vehicle, a central processing unit with a receiver and a processing unit; **characterized in that** the two magnetic sensors of a device are positioned at different azimuths and similar positions relative to the axis of rotation of the wheel, **in that** the computation unit of each device is able to calculate a self-correlation function of the signals measured at the terminals of the two magnetic sensors of the device and **in that** the processing unit of the central processing unit is able to determine, from the self-correlation functions transmitted by the devices of each of the wheels of the vehicle, the front or rear and left or right locations of each of the devices of the vehicle.
